# EUROPÄISCHE PATENTSCHRIFT

(11) **EP 3 693 253 B1**
(45) Veröffentlichungstag und Bekanntmachung des Hinweises auf die Patenterteilung: **20.07.2022**
(21) Anmeldenummer: 19156209.9
(22) Anmeldetag: 08.02.2019
(51) Int. Cl.: B62D 25/20

(54) **NUTZFAHRZEUG MIT LEITUNGSKANAL IM BODENPANEEL**
UTILITY VEHICLE WITH DUCT IN THE FLOOR PANEL
VÉHICULE UTILITAIRE POURVU DE CANAL DE CONDUITE DANS LE PANNEAU DE SOL

(43) Veröffentlichungstag der Anmeldung: 12.08.2020
(73) Patentinhaber: Schmitz Cargobull AG, 48341 Altenberge (DE)
(72) Erfinder: Beelmann, Reinhard, 45721 Haltern am See (DE); Banker, Werner, 48720 Rosendahl (DE); Unland, Daniel, 46395 Bocholt (DE)
(74) Vertreter: Cohausz & Florack

(56) Entgegenhaltungen:
- EP-A1- 3 210 862
- WO-A1-2007/012710
- WO-A1-2010/103310
- DE-A1-102015 107 939

## Beschreibung

Die Erfindung betrifft ein Nutzfahrzeug, insbesondere Lastkraftwagen, Anhänger oder Sattelauflieger, mit einem Bodenpaneel umfassend einen Ladeboden, eine Decklage und eine zwischen dem Ladeboden und der Decklage vorgesehene, wenigstens im Wesentlichen aus einem geschäumten Kunststoff gebildete Kernlage, und mit wenigstens einer sich wenigstens im Wesentlichen von der Stirnseite des Bodenpaneels in Richtung der Rückseite das Nutzfahrzeugs erstreckenden Leitung, wobei die wenigstens eine Leitung wenigstens abschnittsweise in einem in der Kernlage angeordneten Leitungskanal aufgenommen ist und wobei der Leitungskanal sich wenigstens im Wesentlichen von der Stirnseite des Bodenpaneels in Richtung der Rückseite des Bodenpaneels erstreckt.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Dachs des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Auch die Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach, die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport, geeignet.

Die Bodenpaneele insbesondere von Kofferaufbauten für den Kühltransport stellen an ihrer Oberseite typischerweise den Ladeboden bereit, der bedarfsweise aus Holz oder aus Aluminium gebildet ist. Die Unterseite wird meist durch eine Decklage aus Metall gebildet, um die Kernlage aus geschäumtem Kunststoff vor Beschädigung und Feuchtigkeit zu schützen. Im Bereich des Bodenpaneels und/oder des Chassis des Nutzfahrzeugs sind unterschiedliche Ausrüstungskomponenten vorgesehen, die mit einer Leitung verbunden sind, etwa um mit einer elektrischen Spannung, mit Druckluft oder Treibstoff versorgt zu werden. Es kommen aber auch Leitungen in Frage, die der reinen Signalübertragung dienen. Die Leitungen verlaufen typischerweise zur Stirnseite bzw. zur Stirnwand des Nutzfahrzeugs, da die Versorgung mit Strom, Druckluft und Treibstoff regelmäßig von einem mit dem Nutzfahrzeug verbundenen Zugfahrzeug aus erfolgt.

Die Verlegung der entsprechenden Leitungen soll kostengünstig, einfach und so erfolgen, dass Beschädigungen der Leitungen während des Betriebs des Nutzfahrzeugs weitgehend vermieden werden können. Um dies zu gewährleisten, sind bereits unterschiedliche Lösungen vorgeschlagen worden. So ist beispielsweise aus der DE 10 2015 107 939 A1 ein gattungsgemäßes Nutzfahrzeug bekannt, von dem die Erfindung ausgeht. Zudem ist in der EP 3 210 862 A1 ein Nutzfahrzeug mit einem Leitungskanal in einer Kernlage zwischen zwei Decklagen beschrieben. Es besteht hier jedoch weiterer Optimierungsbedarf.

Daher liegt der vorliegenden Erfindung die Aufgabe zugrunde, das eingangs genannte und zuvor näher erläuterte Nutzfahrzeug derart auszugestalten und weiterzubilden, dass die Leitungen einfach, kostengünstig und geschützt vor möglichen Beschädigungen verlegt werden können.

Diese Aufgabe ist bei einem Nutzfahrzeug nach dem Oberbegriff von Anspruch 1 dadurch gelöst, dass der Leitungskanal wenigstens einen Deckel zum Öffnen des Leitungskanals wenigstens teilweise in Längsrichtung des Leitungskanals aufweist.

Die Verwendung eines Leitungskanals ermöglicht es, die Leitungen einfach und separiert von dem geschäumten Kunststoff der Kernlage in die Kernlage einzubringen. Die Leitungen können beispielsweise zunächst in den Leitungskanal eingebracht werden. Anschließend kann der Leitungskanal zwischen dem Ladeboden und der unteren Decklage positioniert und kann die Kernlage ausgeschäumt werden. Beim Einschäumen des Leitungskanals in die Kernlage dringt dann bedarfsweise kein Kunststoff in den Leitungskanal ein, so dass die Leitungen nachträglich ausgetauscht oder weitere Leitungen nachträglich ergänzt werden können. Des Weiteren erstreckt sich der Leitungskanal wenigstens im Grundsatz bis zur Stirnseite des Bodenpaneels, so dass die wenigstens eine Leitung stirnseitig am Bodenpaneel oder stirnseitig am Nutzfahrzeug angeschlossen werden kann.

Der Leitungskanal führt auch zu einem Schutz der Leitungen vor äußeren Einwirkungen, die zu einer Beschädigung der Leitungen führen können. Dabei kann der Leitungskanal gerade dort vorgesehen werden, wo die Gefahr einer versehentlichen Beschädigung der Leitung erhöht ist. An anderer Stelle kann die wenigstens eine Leitung bedarfsweise auch ohne Leitungskanal in dem Bodenpaneel verlaufen oder auch aus dem Bodenpaneel herausgeführt sein. Mit anderen Worten kann der Leitungskanal ganz gezielt in den Bereichen des Bodenpaneels vorgesehen werden, wo dies zu Vorteilen führt und dort auf den Leitungskanal verzichtet werden, wo diese Vorteile nicht zum Tragen kommen oder gar mit Nachteilen zu rechnen wäre.

Der Begriff Leitung wird vorliegend insbesondere recht breit verstanden. So sollen Leitungen neben solchen zum Transport von Medien, insbesondere von Fluiden wie Druckluft, Hydrauliköl und Treibstoff, auch solche sein, die dem Transport von Signalen oder elektrischem Strom dienen. Letztere könnten alternativ auch als Kabel bezeichnet werden.

Des Weiteren wird als die Stirnseite des Bodenpaneels und des Nutzfahrzeugs die in Fahrtrichtung des Nutzfahrzeugs vordere Seite angesehen. Die Rückseite des Bodenpaneels und des Nutzfahrzeugs wird als die in Fahrtrichtung nach hinten weisende Seite angesehen. Bezogen auf das Bodenpaneel bildet der Ladeboden die obere Begrenzung des Bodenpaneels und begrenzt den Laderaum des Nutzfahrzeugs nach unten. Die Decklage bildet dagegen wenigstens im Wesentlichen den unteren Abschluss des Bodenpaneels. Bei der Decklage handelt es sich also vorzugsweise um eine untere Decklage.

Bei einer ersten besonders bevorzugten Ausgestaltung des Nutzfahrzeugs weist der Leitungskanal an der Stirnseite des Bodenpaneels eine Öffnung zum Durchführen der wenigstens einen Leitung auf. Auf diese Weise kann die wenigstens eine Leitung des Leitungskanals recht einfach angeschlossen werden, um für den Transport von Medien, Strom oder Signalen genutzt werden zu können. Dies gilt in besonderem Maße, wenn die Öffnung im Bereich der Kernlage angeordnet ist. Dann ist die wenigstens eine Leitung auch zuverlässig vor Beschädigung geschützt.

Alternativ oder zusätzlich kann der Leitungskanal an der Unterseite des Bodenpaneels eine Öffnung zum Durchführen der wenigstens einen Leitung aufweisen. Auf diese Weise können Kosten für die Herstellung des Bodenpaneels eingespart und eine sehr umfangreiche thermische Isolierung des Bodenpaneels bereitgestellt werden. Nicht zuletzt ist so aber auch ein einfaches und kostengünstiges Verbinden der wenigstens einen Ausrüstungskomponente des Nutzfahrzeugs mit der wenigstens einen Leitung möglich. Dies gilt insbesondere dann, wenn die wenigstens eine Öffnung in der unteren Decklage vorgesehen ist. Mithin kann die Öffnung in der unteren Decklage in wenigstens teilweiser Überdeckung mit einer korrespondierenden Öffnung im Leitungskanal vorgesehen sein, um die Leitung aus dem Leitungskanal aus dem Bodenpaneel herauszuführen oder mit einer weiteren, wenigstens abschnittsweise außerhalb des Bodenpaneels angeordneten Leitung verbinden zu können.

Wenn keine Verbindungen mit weiteren Leitungen, etwa über Steckverbindungen, geplant oder gewünscht sind, kann die wenigstens eine Leitung bedarfsweise nach dem Installieren des Leitungskanals im Bodenpaneel und/oder nach dem Ausschäumen des Bodenpaneels aus der korrespondierenden Öffnung herausgezogen und bedarfsweise bis zu der wenigstens einen Ausrüstungskomponente verlegt werden. Hierzu bietet es sich an, wenn zunächst außerhalb des stirnseitigen Endes des Leitungskanals eine hinreichende Leitungslänge vorgesehen wird, die nach dem Installieren des Leitungskanals im Bodenpaneel und/oder nach dem Ausschäumen des Bodenpaneels aus der korrespondierenden Öffnung herausgezogen werden kann, um die jeweilige Distanz zwischen der Öffnung im Leitungskanal und der entsprechenden Ausrüstungskomponente zu überbrücken. Falls dies als zweckmäßig erachtet wird, können auch einige Leitungen einstückig, also ohne eine Verbindung mit einer weiteren Leitung, und andere mehrteilig, also mit einer entsprechenden Verbindung, verlegt werden.

Zum Schutz der wenigstens einen Leitung ist es besonders effektiv, wenn das Nutzfahrzeug ein Sattelauflieger mit einem Kingpin und/oder einer Scheuerplatte ist, wobei sich der Leitungskanal dann wenigstens im Wesentlichen von der Stirnseite des Bodenpaneels über den Bereich des Kingpins und/oder der Scheuerplatte hinweg in Richtung der Rückseite des Nutzfahrzeugs erstreckt. Die wenigstens eine Leitung gelangt dann nicht versehentlich in Kontakt mit dem Zugfahrzeug, was zu einer nachhaltigen Beschädigung der wenigstens einen Leitung führen könnte. Dabei ist mit dem Bereich des Kingpins und/oder der Scheuerplatte bedarfsweise das Bodenpaneel über seine gesamte Breite zwischen dem vorderen Ende und dem hinteren Ende des Kingpin und/oder der Scheuerplatte gemeint. Die ist für den Schutz der wenigstens einen Leitung vor Beschädigung bevorzugt. Dann kann der Leitungskanal also wenigstens teilweise auch seitlich neben dem Kingpin und/oder der Scheuerplatte verlaufen. Es kann aber auch vorgesehen werden, dass sich der Leitungskanal direkt über den Kingpin und/oder die Scheuerplatte als solche hinweg erstreckt. Diese zentralere Anordnung des Leitungskanals kann zum Schutz der wenigstens einen Leitung ebenfalls zweckmäßig sein. Ebenso ist aus Sicht einer möglichst weitreichenden thermischen Isolation je nach Anwendungsfall bedarfsweise eine eher zentrale oder eine eher seitliche Anordnung des Leitungskanals zweckmäßig. Unabhängig davon kann die Öffnung an der Unterseite des Bodenpaneels von der Stirnseite des Bodens gesehen hinter dem Bereich des Kingpins und/oder der Scheuerplatte angeordnet sein, um die Leitung in einem relativ geschützten Bereich des Bodenpaneels aus dem Bodenpaneel herauszuführen bzw. mit wenigstens einer weiteren Leitung verbinden zu können.

Der Leitungskanal weist wenigstens einen Deckel zum Öffnen des Leitungskanals auf. Dadurch wird das Einbringen von Leitungen in den Leitungskanal vereinfachen, und zwar insbesondere dann, wenn die Leitungen verhältnismäßig große Steckerenden aufweisen. Große Steckerenden können dabei großvolumige Steckerenden und/oder Steckerenden mit einem relativ großen Querschnitt quer zur Längserstreckung der Leitung sein. Derartige Steckerenden lassen sich nämlich nur bedingt durch den Leitungskanal hindurchziehen oder würden hierzu einen recht großen Querschnitt des Leitungskanals erfordern. Ein solch großer Querschnitt würde jedoch zu Lasten des Kunststoffs und damit zu Lasten der thermischen Isolation des Bodenpaneels gehen.

Dabei werden vorliegend und nachfolgend unter den Steckerenden der wenigstens einen Leitung der Einfachheit und der besseren Verständlichkeit halber solche verstanden, die tatsächlich einen Stecker aufweisen, aber auch solche, die eine Buchse aufweisen. Es soll vorliegend also nicht zwingend zwischen einem Leitungsende mit einem Stecker und einem Leitungsende mit einer Buchse unterschieden werden, da es erfindungsmäßig nicht oder wenigstens nicht nennenswert darauf ankommt, ob an einem Leitungsende ein Stecker oder eine Buchse vorgesehen ist. Grundsätzlich ist es für das Einbringen einer Leitung in den Leitungskanal zweckmäßig, wenn sich der Deckel wenigstens teilweise in Längsrichtung des Leitungskanals erstreckt.

Um den Deckel leicht öffnen und wieder schließen zu können, und zwar bedarfsweise mehrfach, bietet es sich an, wenn der wenigstens eine Deckel über ein Scharnier, insbesondere ein Filmscharnier, und/oder formschlüssig, insbesondere über eine Rastverbindung, am Leitungskanal gehalten ist. Dies kann ferner dafür sorgen, dass ein versehentliches Verlieren des Deckels verhindert wird. Besonders zweckmäßig ist es zudem, das Filmscharnier und die Rastverbindung miteinander zu kombinieren, um ein leichtes Fügen und eine unverlierbare Anordnung des Deckels zu erreichen.

Wenn der Leitungskanal an seinem, der Rückseite des Bodenpaneels zugeordneten Längsende eine Anschlussbox zur Aufnahme von wenigstens einem Steckerende wenigstens einer Leitung aufweist, können auch problemlos Leitungen mit großen Steckerenden verwendet werden, ohne dass deshalb Leitungskanäle mit insgesamt sehr großen Querschnitten vorgesehen werden müssten. Dies hat insbesondere auch hinsichtlich der thermischen Isolierung des Nutzfahrzeugs über das Bodenpaneel Vorteile. Mithin ist es zweckmäßig, wenn die Anschlussbox einen größeren freien Querschnitt quer zur Längsrichtung des Leitungskanals aufweist als dies bei dem mit der Anschlussbox verbundenen Abschnitt des Leitungskanals der Fall ist. Auch große Steckerenden können, wenigstens so lange das Bodenpaneel nicht vollständig ausgeschäumt ist, im Leitungskanal aufgenommen sein, ohne dass die Steckerenden mit ausgeschäumt werden müssten. Wenn die wenigstens eine Leitung keine großen Steckerenden aufweist, kann die Verwendung einer Anschlussbox dennoch bevorzugt sein, weil dann das Verbinden eines Steckerendes der wenigstens einen Leitung im Leitungskanal mit einer weiteren Leitung vereinfacht wird. Alternativ oder zusätzlich kann in der Anschlussbox aber auch eine zunächst überschüssige Leitungslänge vorgesehen werden, die nach der Installation des Leitungskanals und/oder nach dem Ausschäumen des Bodenpaneels aus der Anschlussbox, insbesondere aus einer Öffnung in der Anschlussbox und der unteren Decklage, herausgezogen werden kann.

Selbst wenn die Anschlussbox keinen vergrößerten Querschnitt aufweist, um größere Steckerenden oder eine zunächst überschüssige Leitungslänge aufzunehmen, kann die Anschlussbox zweckmäßig sein, um die Leitung teilweise von der Stirnseite nach hinten durch den Leitungskanal und die entsprechende Leitungslänge dabei hinten aus der Anschlussbox zu ziehen. Die entsprechende Leitungslänge kann dann außerhalb des Bodenpaneels zu einer Ausrüstungskomponente verlegt werden.

Besonders zweckmäßig ist es, wenn die Öffnung an der Unterseite des Bodenpaneels in Überdeckung mit einer Öffnung in der Anschlussbox ist, etwa um das Verbinden des wenigstens einen Steckerendes der wenigstens einen Leitung mit einem Steckerende einer weiteren Leitung und/oder um das teilweise Herausziehen der wenigstens einen Leitung aus dem Leitungskanal zu ermöglichen. Damit gleichfalls sichergestellt werden kann, dass beim Ausschäumen der Kernlage mit einem geschäumten Kunststoff nicht versehentlich Kunststoff in die Anschlussbox eindringen kann, kann in die Anschlussbox, insbesondere in deren Unterseite, eine umlaufende Sollbruchlinie eingebracht werden. Diese Sollbruchlinie kann als Schwächung in der Anschlussbox vorgesehen sein. Jedenfalls kann die Sollbruchlinie zum Herausbrechen eines Öffnungsabschnitts zum Bereitstellen einer Öffnung in der Anschlussbox dienen. Dies ist dann einfach, schnell und zuverlässig möglich. Über diese Öffnung kann dann auch bedarfsweise das Verbinden des wenigstens einen Steckerendes der wenigstens einen Leitung mit einem Steckerende einer weiteren Leitung und/oder das teilweise Herausziehen der wenigstens einen Leitung aus dem Leitungskanal bewirkt werden.

Wenn der Leitungskanal einen Stirnwandanschluss aufweist, dessen stirnseitiges Ende in vertikaler Richtung weiter von der Decklage beabstandet ist als das rückseitige Ende des Stirnwandanschlusses, kann so eine knickfreie und einfach zu bewirkende Leitungsführung zwischen der Stirnwand und dem Bodenpaneel bereitgestellt werden. Überhaupt ist es günstig, wenn die Leitung nicht an der unteren Kante des Bodenpaneels an der Stirnseite austritt, und zwar auch um einer Beschädigung der wenigstens einen Leitung vorzubeugen. Aus demselben Grund kann alternativ oder zusätzlich das stirnseitige Ende des Stirnwandanschlusses in vertikaler Richtung näher an dem Ladeboden angeordnet sein als das rückseitige Ende des Stirnwandanschlusses.

Besonders zweckmäßig und schonend für die wenigstens eine Leitung ist es, wenn der Stirnwandanschluss in der Längserstreckung des Leitungskanals gesehen, insbesondere wenigstens im Wesentlichen konstant, gekrümmt ist. So werden Knicke vermieden und kann die wenigstens eine Leitung zweckmäßig an der Stirnwand nach oben geführt werden. Dabei kann der Krümmungsradius des Leitungskanals in einer sich wenigstens im Wesentlichen senkrecht zum Bodenpaneel und in der Längsrichtung des Bodenpaneels erstreckenden Ebene angeordnet sein. Der Leitungskanal erstreckt sich so nach vorne hin von der unteren Decklage weg nach oben hin bzw. zum Ladeboden hin nach oben.

Um die wenigstens eine Leitung einfach in den Leitungskanal einzubringen, kann der Stirnwandanschluss wenigstens in der Längsrichtung des Leitungskanals wenigstens zweiteilig ausgebildet sein. Der Stirnwandanschluss oder wenigstens ein Teil des Stirnwandanschlusses kann dann erst montiert werden, nachdem die wenigstens eine Leitung in den Leitungskanal eingebracht worden ist. Dies ist insbesondere dann zweckmäßig, wenn die wenigstens eine Leitung stirnseitig ein großes Steckerende aufweist. Zum Einbringen der wenigstens einen Leitung und zur Handhabung des Leitungskanals ist es in diesem Zusammenhang zweckmäßig, wenn der Stirnwandanschluss wenigstens in etwa in einer Richtung quer zum Bodenpaneel zweiteilig ausgebildet ist. Anders ausgedrückt ist es bevorzugt, wenn der Stirnwandanschluss wenigstens aus einem oberen Bauteil und einem unteren Bauteil besteht. Unabhängig davon ist es zweckmäßig, wenn die beiden Bauteile zusammengesteckt werden können und dann formschlüssig oder reibschlüssig aneinander und/oder am angrenzenden Abschnitt des Leitungskanals gehalten sind.

Um unterschiedliche Leitungen unabhängig und/oder voneinander getrennt aufnehmen zu können, kann der Leitungskanal mehrere, insbesondere sich wenigstens im Wesentlichen parallel zueinander erstreckende, Teilkanäle aufweisen.

So können beispielsweise medienfördernde Leitungen voneinander oder von elektrischen Leitungen und Signalleitungen getrennt werden. So wird eine gegenseitige Beeinträchtigung der Leitungen untereinander vermieden. Um eine gute thermische Isolation des Bodenpaneels bereitstellen zu können, ist es angebracht, wenigstens einige der Teilkanäle quer zum Bodenpaneel nebeneinander anzuordnen. Zudem müssen nicht alle Teilkanäle mit dem wenigstens einen Deckel versehen sein. Insbesondere für den Fall, dass nur einige der verlegten Leitungen verhältnismäßig große Steckerenden aufweisen, kann es ausreichen, wenn nur ein Teilkanal oder nur ausgesuchte Teilkanäle mit dem wenigstens einen Deckel verschlossen werden können. Dabei sind die Teilkanäle vorzugsweise in der Längsrichtung des Leitungskanals durch den wenigstens einen Deckel verschlossen, um das Einbringen der Leitungen in den Leitungskanal zu erleichtern.

Zum Zwecke der Kostensenkung und der thermische Isolation des Bodenpaneels ist es angebracht, wenn der Leitungskanal wenigstens im Wesentlichen aus Kunststoff gebildet ist. Zudem ist es hinsichtlich des Betriebs des Nutzfahrzeugs bevorzugt, wenn die wenigstens eine Leitung als elektrische Leitung, Druckluftleitung, Hydraulikleitung, Treibstoffleitung und/oder Signalleitung ausgebildet ist.

Zum Schutz der Leitungen kann es unabhängig von der Art der Leitung zielführend sein, den Leitungskanal in der Quererstreckung des Bodenpaneels wenigstens im Wesentlichen etwa mittig im Bodenpaneel anzuordnen. Auf eine exakt mittige Anordnung wird es in vielen Fällen jedoch nicht ankommen. Es wird stattdessen in vielen Fällen ausreichen, wenn der Leitungskanal näher an der Mittelachse oder Längsachse des Nutzfahrzeugs oder Bodenpaneels angeordnet ist als am Rand des Nutzfahrzeugs oder Bodenpaneels.

Hinsichtlich eines einfachen und kostengünstigen Anschlusses der wenigstens einen Leitung des Leitungskanals ist es angebracht, wenigstens ein Steckerende der wenigstens einen Leitung außerhalb des Leitungskanals anzuordnen. Dies gilt insbesondere für den Fall, dass das wenigstens eine Steckerende außerhalb des Stirnwandanschlusses und/oder außerhalb des stirnseitigen Endes des Leitungskanals und/oder vor dem stirnseitigen Ende des Bodenpaneels angeordnet ist. Aus demselben Grund kann wenigstens ein Steckerende der wenigstens einen Leitung innerhalb der Anschlussbox und/oder außerhalb des rückseitigen Endes des Leitungskanals angeordnet sein. Dabei ist eine Verbindung des entsprechenden Steckerendes mit einem korrespondierenden Steckerende einer weiteren Leitung in der Anschlussbox bevorzugt, wenn eine Beschädigung oder ein Lösen der Steckverbindung vermieden werden soll. Das wenigstens eine Steckerende der wenigstens einen Leitung des Leitungskanals kann aber auch außerhalb der Abschlussbox angeordnet sein, und zwar insbesondere dann, wenn dadurch das Verbinden der wenigstens einen Leitung mit wenigstens einer weiteren Leitung vereinfacht werden kann und soll.

Ganz grundsätzlich kann ein Steckerende der wenigstens einen Leitung im Leitungskanal auch direkt mit der Ausrüstungskomponente verbunden werden. Aber auch in diesem Fall kann es zweckmäßig sein, dieses Steckerende während der Fertigung des Bodenpaneels zunächst in der Anschlussbox vorzusehen und erst anschließend aus der Anschlussbox herauszuziehen sowie mit der Ausrüstungskomponente zu verbinden.

Ganz grundsätzlich kann es aber auch hinsichtlich der Herstellung des Bodenpaneels begünstigt sein, wenn das wenigstens eine Steckerende mit wenigstens einem korrespondierenden Steckerende wenigstens einer weiteren korrespondierenden Leitung verbunden ist, so können die Leitungen einfach und sehr flexibel verlegt werden. Dabei dient es der einfachen Verlegung der wenigstens einen Leitung, insbesondere der wenigstens einen weiteren korrespondierenden Leitung, wenn diese weitere Leitung wenigstens teilweise außerhalb des Bodenpaneels angeordnet ist. Besonders zweckmäßig hinsichtlich des Verlegens und einer möglichen Beschädigung der Leitung ist es, die Leitung an der Unterseite des Bodenpaneels und/oder der Decklage anzuordnen.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug in einer perspektivischen Ansicht,
- Fig. 2A-C: Details des Bodenpaneels des Nutzfahrzeugs aus Fig. 1 in einer Ansicht von unten, in einer Schnittansicht längs zum Bodenpaneel und in einer Schnittansicht quer zum Bodenpaneel,
- Fig. 3A-B: einen Mittelabschnitt des Leitungskanals aus Fig. 2 in geschlossener und geöffneter Stellung jeweils in einem Querschnitt,
- Fig. 4A-B: den Stirnwandanschluss des Leitungskanals aus Fig. 2 in einer Schnittansicht und in einer perspektivischen Ansicht und
- Fig. 5A-C: die Anschlussbox des Leitungskanals aus Fig. 2 in einer Schnittansicht und in perspektivischen Ansichten.

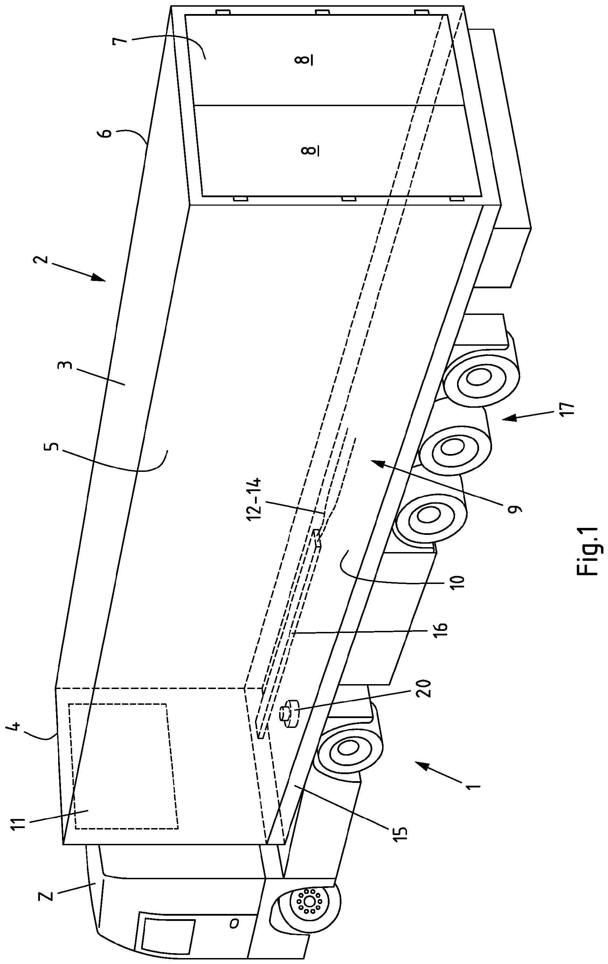

In der Fig. 1 ist ein Nutzfahrzeug 1 in Form eines Sattelaufliegers mit einem Kofferaufbau 2 in einer perspektivischen Ansicht dargestellt, das von einer Zugmaschine Z gezogen wird. Der Kofferaufbau 2 umfasst ein festes Dach 3, eine feste Stirnwand 4, zwei feste Seitenwände 5,6 und eine feste Rückwand 7, die im Wesentlichen durch zwei Flügeltüren 8 gebildet wird. Zudem umfasst der Kofferaufbau 2 einen Laderaum 9, der nach unten durch einen Ladeboden 10 begrenzt wird, der dem Aufstellen von Ladung dient. Die Seitenwände 5,6, die Stirnwand 4, die Flügeltüren 8 und das Dach 3 werden wenigstens im Wesentlichen aus Paneelelementen gebildet. Zum Kühlen des Laderaums 9 ist an der Stirnwand 4 eine Transportkältemaschine 11 vorgesehen, die Luft aus dem Laderaum 9 ansaugt, kühlt und sodann wieder in den Laderaum 9 zurückbläst. Das Nutzfahrzeug 1 weist eine Reihe von Ausstattungskomponenten auf, die nicht im Einzelnen dargestellt sind. Beispielsweise ist eine Bremsanlage vorgesehen, die mit Druckluft versorgt werden muss. Zudem sind vorliegend verschiedene Beleuchtungseinheiten vorgesehen, die mit elektrischer Spannung versorgt werden müssen. Zur Versorgung dieser Ausstattungskomponenten sind entsprechende Leitungen 12-14 vorgesehen, die teilweise durch einen Leitungskanal 15 im Bodenpaneel 16 zur Stirnseite des Bodenpaneels 16 bzw. zur Stirnwand des Nutzfahrzeugs geführt sind.

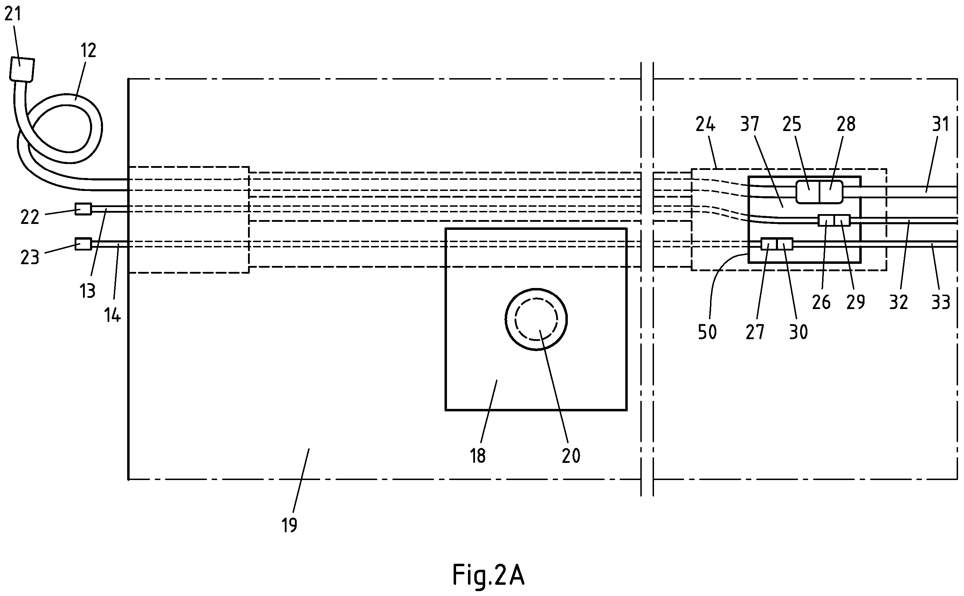

Das Bodenpaneel 16 des Nutzfahrzeugs 1 ist in den Fig. 2A-C näher dargestellt. In der Fig. 2A ist das Bodenpaneel 16 von unten dargestellt. Der besseren Übersichtlichkeit halber ist das Chassis 17 des Nutzfahrzeugs 1 nicht dargestellt. Das Bodenpaneel 16 weist benachbart zur Stirnseite des Bodenpaneels 16 eine Scheuerplatte 18 auf, die bei dem dargestellten und insoweit bevorzugten Bodenpaneel 15 bündig in die untere Decklage 19 des Bodenpaneels 15 eingelassen ist. Etwa mittig zu der Scheuerplatte 18 ist ein Kingpin 20 vorgesehen, der auch als Königszapfen bezeichnet wird und der dem Ankuppeln des Nutzfahrzeugs 1 an die Zugmaschine Z dient. Die Scheuerplatte 18 und der Kingpin 20 sind in den Fig. 2A-C der besseren Übersichtlichkeit halber nicht maßstäblich, sondern kleiner als üblich dargestellt. Grundsätzlich sind die Fig. 2A-C ohnehin schematisch und nicht maßstäblich wiedergegeben, da es sich vorliegend um Prinzipskizzen handelt.

Von der Stirnseite des Bodenpaneels 16 sind Leitungen 12-14 in den Leitungskanal 15 des Bodenpaneels 16 eingeführt, die mit ihren jeweiligen Steckerenden 21-23 stirnseitig aus dem Bodenpaneel 16 herausstehen. Steckerenden 21-23 können hier auch als solche verstanden werden, die eine Buchse aufweisen. Die Leitungen 12-14 werden in dem Leitungskanal 15 von der Stirnseite des Bodenpaneels 16 bis hinter die Scheuerplatte 18 und dort in eine Anschlussbox 24 geführt, in der die hinteren Steckerenden 25-27 der Leitungen 12-14, die ebenfalls Buchsen aufweisen können, aufgenommen sind. In der Anschlussbox 24 sind an den entsprechenden Steckerenden 25-27 korrespondierende Steckerenden 28-30 weiter Leitungen 31-33 angeschlossen. Die weiteren Leitungen 31-33 sind dann außerhalb des Bodenpaneels 16 und bis zu den jeweiligen Ausrüstungskomponenten geführt, die jedoch nicht dargestellt sind.

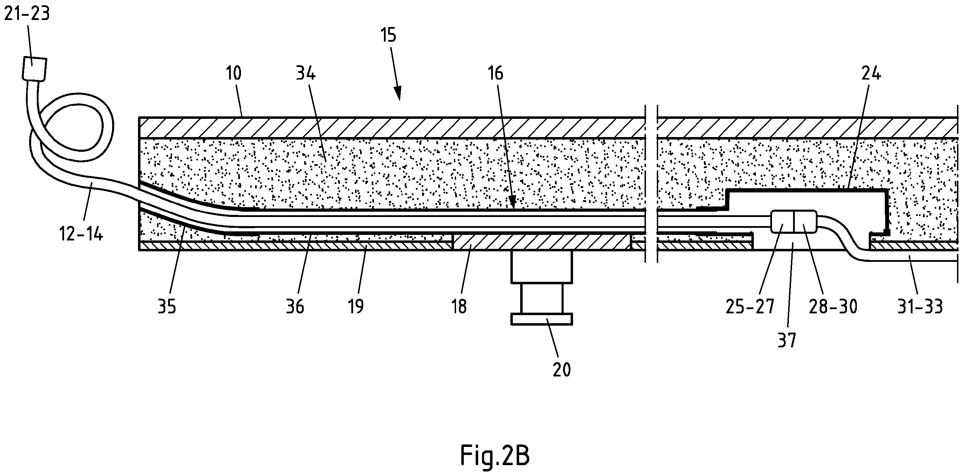

Der Verlauf der Leitungen 12-14,31-33 in Längsrichtung des Bodenpaneels 15 ist in der Fig. 2B im Einzelnen dargestellt. Das Bodenpaneel 15 umfasst neben dem Ladeboden 10 und der unteren Deckschicht 19 noch eine Kernschicht 34, die im Wesentlichen aus geschäumtem Kunststoff gebildet ist und in der der Leitungskanal 16 aufgenommen ist. Die Leitungen 12-14 laufen dabei von dem stirnseitigen Ende des Bodenpaneels 15 in einen Stirnwandanschluss 35 des Leitungskanals 16 hinein und erstecken sich sodann durch den Mittelabschnitt 36 des Leitungskanals 16 hindurch bis in die Anschlussbox 24 hinein, in der die Leitungen 12-14 über entsprechenden Steckverbindungen 25-30 über eine Öffnung 37 mit weiteren Leitungen 31-33 verbunden sind, die sich anschließend an die Verbindung in der Anschlussbox 24 außerhalb und unterhalb des Bodenpaneels 15 erstrecken. Dabei sind die Steckerenden 21,25 wenigstens einer der in dem Leitungskanal 16 aufgenommenen Leitung 12 im Querschnitt größer als der Querschnitt des Leitungskanals 16. Die Steckerenden 21,25 der entsprechenden Leitung 12 können also nicht durch den Mittelabschnitt 36 des Leitungskanals 16 hindurchgezogen werden. Die entsprechende Leitung 12 muss also in den Leitungskanal 16 eingelegt werden. Dabei steht dann ein Steckerende 21 stirnseitig gegenüber dem Leitungskanal 16 vor und ist ein Steckerende 25 in der Anschlussbox 24 aufgenommen, die gegenüber dem Mittelabschnitt 36 des Leitungskanals 16 einen vergrößerten Querschnitt aufweist.

Alternativ zu dem in den Fig. 2A-B dargestellten Ausführungsbeispiel könnten die Steckerenden der in dem Leitungskanal angeordneten Leitungen nur während der Fertigung des Bodenpaneels in der Anschlussbox angeordnet sein. Nach der eigentlichen Fertigung des Bodenpaneels und nach dem Öffnen der Anschlussbox können die Steckerenden auch aus der Anschlussbox herausgezogen und bedarfsweise mit Ausrüstungskomponenten oder weiteren Leitungen verbunden werden. Die hierfür erforderliche Leitungslänge kann dabei zunächst in der Anschlussbox und/oder außerhalb des stirnseitigen Endes des Leitungskanals bereitgehalten werden. Letzteres ist für eine bessere thermische Isolation prinzipiell bevorzugt, solange die Reibungskräfte beim teilweisen Hindurchziehen der wenigstens einen Leitung durch den Leitungskanal nicht zu groß werden. Bedarfsweise kann also die wenigstens eine Leitung des Leitungskanals zum Anschließen der Ausrüstungskomponente auch teilweise durch den Leitungskanal hindurchgezogen werden.

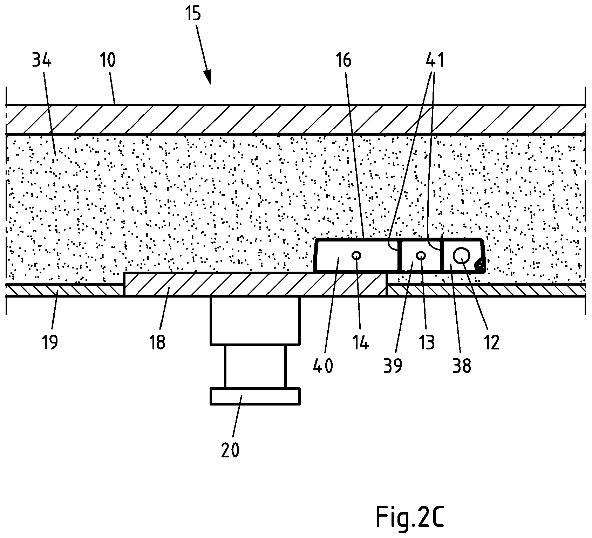

In der Fig. 2C ist das Bodenpaneel 15 im Bereich des Leitungskanals 16 in einem Querschnitt dargestellt. Der Leitungskanal 16 liegt mit seiner Unterseite wenigstens im Wesentlichen auf der unteren Decklage 19 auf, da dies fertigungstechnisch zweckmäßig ist. Zwingend ist dies jedoch nicht. Der Leitungskanal 16 weist zudem mehrere in Querrichtung des Bodenpaneels nebeneinander liegende und parallel zueinander angeordnete Teilkanäle 38-40 auf, die durch Trennwände 41 wenigstens im Wesentlichen voneinander getrennt sind. Dabei ist der links dargestellte Teilkanal 40 in der Längsrichtung des Leitungskanals 16 geschlossen und kann auch nicht geöffnet werden. Hier werden insbesondere elektrische Leitungen hindurch verlegt, die relativ kleine Steckerenden aufweisen. Diese erfordern nicht viel Platz und können problemlos durch den geschlossenen Teilkanal 40 hindurchgeführt werden. Die angrenzenden Teilkanäle 38,39 nehmen dagegen bedarfsweise Medien transportierende Leitungen 12 auf. Da diese große Steckerenden 21,25 aufweisen, die nicht ohne Weiteres durch die Teilkanäle 38,39 hindurchgeführt werden können, können die entsprechenden Teilkanäle 38,39 geöffnet werden, um die Leitungen 12 der Länge nach in den Leitungskanal 16 einlegen zu können.

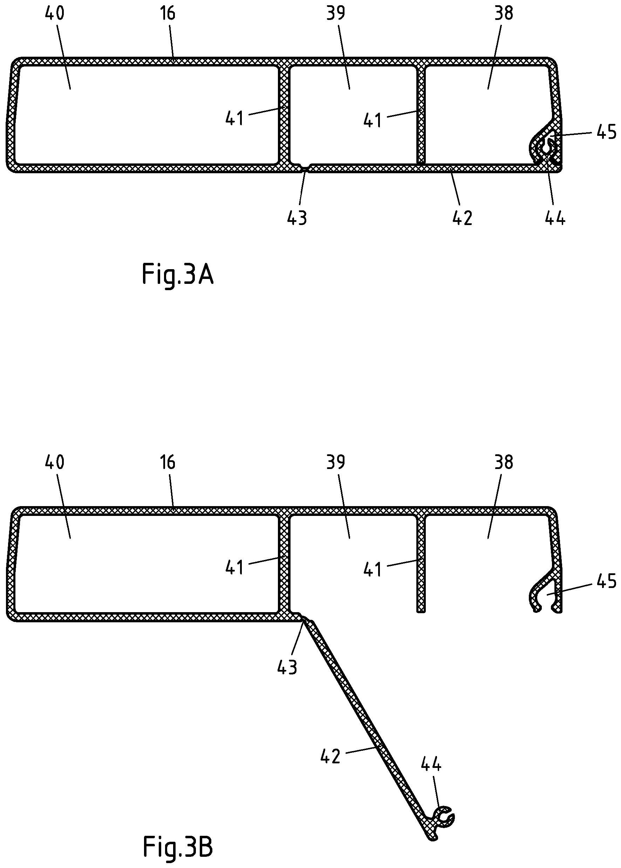

In den Fig. 3A-B ist der Querschnitt des Leitungskanals 16 vergrößert dargestellt, und zwar einmal in geöffneter und einmal in geschlossener Stellung. Zum bereichsweisen Öffnen des Leitungskanals 16 bzw. zum Öffnen von Teilkanälen 38,39 weist dieser einen sich in der Längsrichtung des Leitungskanals 16 erstreckenden Deckel 42 auf, der über ein sich ebenfalls in der Längsrichtung des Leitungskanals 16 erstreckendes Filmscharnier 43 unverlierbar am Leitungskanal 16 gehalten ist. Der Deckel 42 kann somit der Länge nach zwischen der offenen Stellung in die geschlossene Stellung und zurück verstellt werden. In der geöffneten Stellung kann eine Leitung 12 der Länge nach in den Leitungskanal 16 bzw. einen Teilkanal 38,39 eingelegt werden, ohne dass die Steckerenden 21,25 durch den Leitungskanal 16 bzw. einen Teilkanal 38,39 geführt werden müssen. Zum Schließen wird der Deckel 42 in die geschlossene Stellung gedrückt, in der der Deckel 42 mit einer sich in der Längsrichtung des Leitungskanals 16 erstreckenden Rastrippe 44 in einer sich ebenfalls in Längsrichtung des Leitungskanals 16 erstreckende Rastaufnahme 45 rastend aufgenommen wird. In der geschlossenen Stellung wird der Leitungskanal 16 in das Bodenpaneel 15 eingelegt und eingeschäumt. Die Anordnung der Rastrippe 44 und der Rastaufnahme 45 können auch zwischen dem Deckel 42 und dem Leitungskanal 16 getauscht werden.

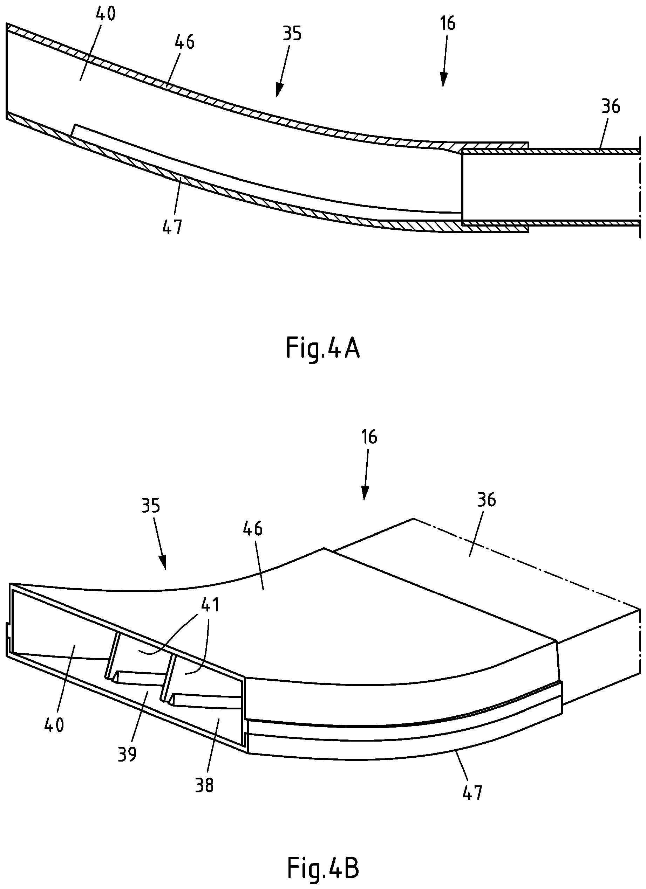

In den Fig. 4A-B ist der Stirnwandanschluss 35 des Leitungskanals 16 dargestellt, und zwar in einem Längsschnitt und in einer perspektivischen Ansicht. Der Stirnwandanschluss 35 ist zweiteilig ausgeführt und auf den Leitungskanal 16 aufgesteckt. Dabei kann zunächst das obere Bauteil 46 des Stirnwandanschlusses 35 montiert werden. Sodann wird die entsprechende Leitung 12 bei geöffnetem Deckel 42 in den Leitungskanal 16 eingelegt. Dann wird der Deckel 42 geschlossen und das untere Bauteil 47 des Stirnwandanschlusses 35 aufgesteckt. Der Stirnwandanschluss 35 wird dann reibschlüssig an dem Mittelabschnitt 36 des Leitungskanals 16 gehalten. Es könnte aber auch bedarfsweise ein Formschluss vorgesehen sein. In der geschlossenen Stellung des Stirnwandanschlusses 35 ist dieser gekrümmt und erstreckt sich nach oben in Richtung des Ladebodens 10 oder der Stirnwand 4. Die Krümmung ist dabei bedarfsweise wenigstens im Wesentlichen konstant.

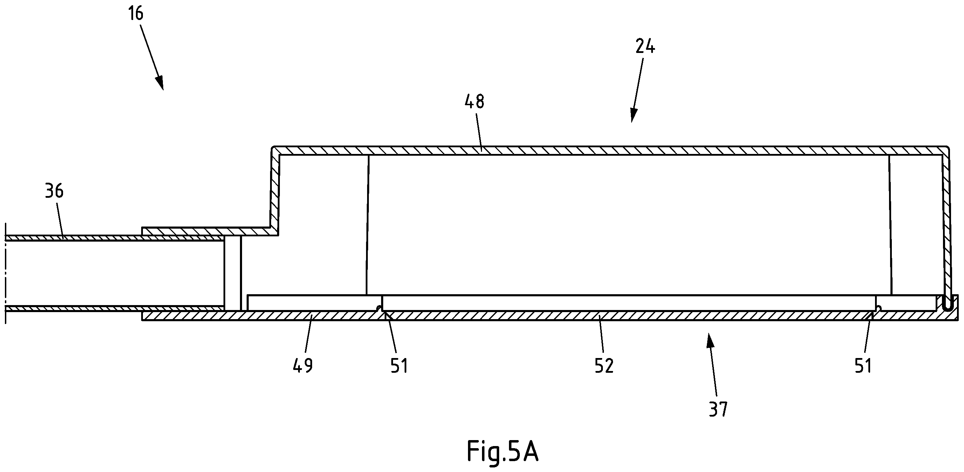

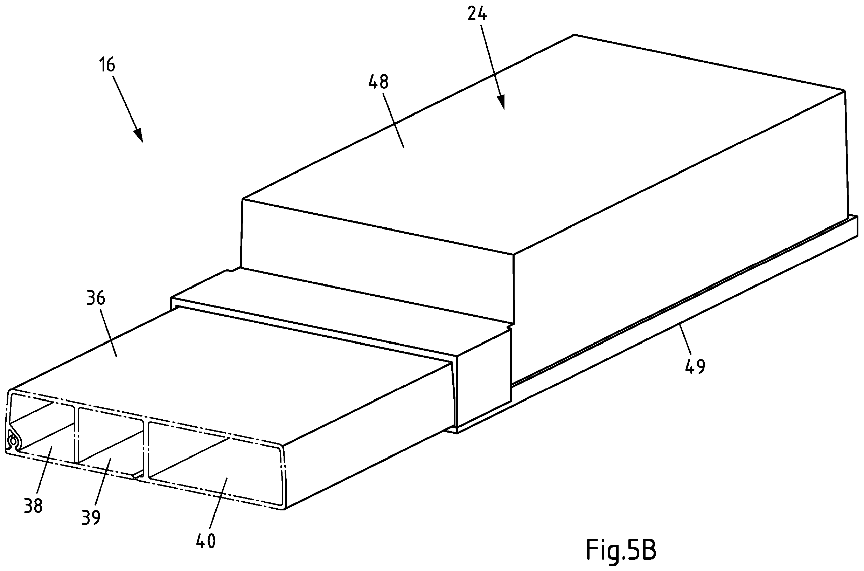

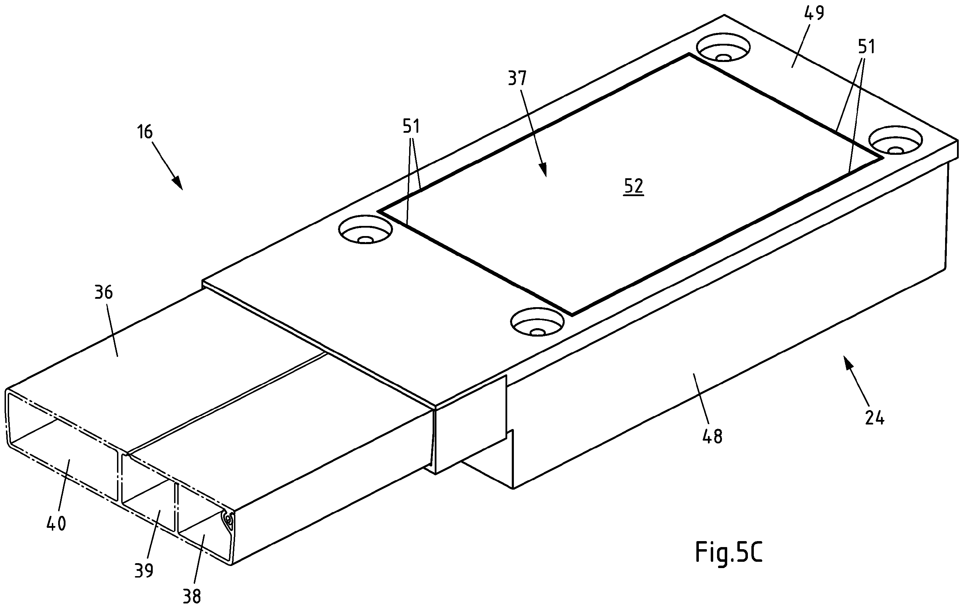

In den Fig. 5A-C ist die Anschlussbox 24 des Leitungskanals 16 in einem Längsschnitt und perspektivischen Ansichten von oben und unten dargestellt. Auch die Anschlussbox 24 ist zweiteilig ausgebildet und reibschlüssig auf den Mittelabschnitt 36 des Leitungskanals 16 aufgeschoben. Dabei wäre auch hier ein Formschluss alternativ denkbar. Zunächst wird nur das obere Bauteil 48 der Anschlussbox 24 auf den Mittelabschnitt 36 des Leitungskanals 16 aufgesteckt. Bei geöffnetem Deckel 42 kann dann die entsprechende Leitung 12 der Länge nach in den Leitungskanal 16 eingelegt werden. Anschließend wird der Deckel 42 des Mittelabschnitts 36 des Leitungskanals 16 geschlossen und das untere Bauteil 49 der Anschlussbox 24 aufgesteckt. Die Anschlussbox 24 ist dann verschlossen. Der Leitungskanal 16 wird dann in das Bodenpaneel 15 eingebracht und in der Kernschicht 34 des Bodenpaneels 15 eingeschäumt. Nachdem das Bodenpaneel 15 ausgeschäumt und der geschäumte Kunststoff ausgehärtet ist, wird eine Öffnung 50 in die untere Decklage 19 eingebracht, wenn diese nicht bereits vor dem Ausschäumen bzw. vor dem Einbringen des Leitungskanals 16 vorgesehen worden ist. Die Anschlussbox 24 kann nach dem Ausschäumen der Kernlage 34 und dem Aushärten des Kunststoffs durch Herausbrechen eines durch eine Sollbruchlinie 51 begrenzten Öffnungsabschnitts 52 geöffnet werden. Auf diese Weise wird ein Zugang zu dem Inneren der Anschlussbox 24 über die Öffnung 37 geschaffen, in der die hinteren Steckerenden 25-27 der Leitungen 12-14 aufgenommen sind. Nun können diese Steckerenden 25-27 über die entsprechenden, einander überdeckenden Öffnungen 50,37 in der unteren Decklage 19 und der Anschlussbox 24 mit korrespondierenden Steckerenden 28-30 weiterer, überwiegend unterhalb der unteren Decklage 19 verlaufender Leitungen 31-33 verbunden werden. Diese weiteren Leitungen 31-33 erstrecken sich dabei vorzugsweise bis zu den zugehörigen, nicht dargestellten Ausrüstungskomponenten.

### Bezugszeichenliste

- 1: Nutzfahrzeug
- 2: Kofferaufbau
- 3: Dach
- 4: Stirnwand
- 5,6: Seitenwand
- 7: Rückwand
- 8: Flügeltür
- 9: Laderaum
- 10: Ladeboden
- 11: Transportkältemaschine
- 12-14: Leitung
- 15: Bodenpaneel
- 16: Leitungskanal
- 17: Chassis
- 18: Scheuerplatte
- 19: Decklage
- 20: Kingpin
- 21: Steckerende
- 24: Anschlussbox
- 25-30: Steckerende
- 31-33: Leitung
- 34: Kernschicht
- 35: Stirnwandanschluss
- 36: Mittelanschnitt
- 37: Öffnung
- 38-40: Teilkanal
- 41: Trennwand
- 42: Deckel
- 43: Filmscharnier
- 44: Rastrippe
- 45: Rastaufnahme
- 46: oberes Bauteil
- 47: unteres Bauteil
- 48: oberes Bauteil
- 49: unteres Bauteil
- 50: Öffnung
- 51: Sollbruchlinie
- 52: Öffnungsabschnitt

## Patentansprüche

1. Nutzfahrzeug (1), insbesondere Lastkraftwagen, Anhänger oder Sattelauflieger, mit einem Bodenpaneel (15) umfassend einen Ladeboden (10), eine Decklage (19) und eine zwischen dem Ladeboden (10) und der Decklage (19) vorgesehene, wenigstens im Wesentlichen aus einem geschäumten Kunststoff gebildete Kernlage (34), und mit wenigstens einer sich wenigstens im Wesentlichen von der Stirnseite des Bodenpaneels (15) in Richtung der Rückseite des Nutzfahrzeugs (1) erstreckenden Leitung (12-14), wobei die wenigstens eine Leitung (12-14) wenigstens abschnittsweise in einem in der Kernlage (34) angeordneten Leitungskanal (16) aufgenommen ist und wobei der Leitungskanal (16) sich wenigstens im Wesentlichen von der Stirnseite des Bodenpaneels (15) in Richtung der Rückseite des Bodenpaneels (15) erstreckt,
**dadurch gekennzeichnet, dass**
der Leitungskanal (16) wenigstens einen Deckel (42) zum Öffnen des Leitungskanals (16) wenigstens teilweise in Längsrichtung des Leitungskanals (16) aufweist.

2. Nutzfahrzeug nach Anspruch 1,
**dadurch gekennzeichnet, dass**
der Leitungskanal (16) an der Stirnseite des Bodenpaneels (15), insbesondere im Bereich der Kernlage (34), eine Öffnung zum Durchführen der wenigstens einen Leitung (12-14) aufweist und/oder dass der Leitungskanal (16) an der Unterseite des Bodenpaneels (15), insbesondere in der Decklage (19) eine Öffnung (37) zum Durchführen der wenigstens einen Leitung (12-14) aufweist.

3. Nutzfahrzeug nach Anspruch 1 oder 2,
**dadurch gekennzeichnet, dass**
das Nutzfahrzeug (1) ein Sattelauflieger mit einem Kingpin (20) und/oder einer Scheuerplatte (18) ist, dass sich der Leitungskanal (16) wenigstens im Wesentlichen von der Stirnseite des Bodenpaneels (15) über den Bereich des Kingpins (20) und/oder der Scheuerplatte (18) hinweg in Richtung der Rückseite des Nutzfahrzeugs (1) erstreckt und dass, vorzugsweise, die Öffnung (37,50) an der Unterseite des Bodenpaneels (15) von der Stirnseite des Bodenpaneels (15) gesehen hinter dem Bereich des Kingpins (20) und/oder der Scheuerplatte (18) angeordnet ist.

4. Nutzfahrzeug nach einem der Ansprüche 1 bis 3,
**dadurch gekennzeichnet, dass**
der wenigstens eine Deckel (42) über ein Scharnier, insbesondere ein Filmscharnier (43), und/oder formschlüssig, insbesondere über eine Rastverbindung, am Leitungskanal (16) gehalten ist.

5. Nutzfahrzeug nach einem der Ansprüche 1 bis 4,
**dadurch gekennzeichnet, dass**
der Leitungskanal (16) an seinem der Rückseite des Bodenpaneels (15) zugeordneten Längsende eine Anschlussbox (24) zur Aufnahme von wenigstens einem Steckerende (25-27) wenigstens einer Leitung (12-14) vorgesehen ist und dass, vorzugsweise, die Anschlussbox (24) einen größeren freien Querschnitt in der Längsrichtung des Leitungskanals (16) als der mit der Anschlussbox (24) verbundene Abschnitt des Leitungskanals (16) aufweist.

6. Nutzfahrzeug nach Anspruch 5,
**dadurch gekennzeichnet, dass**
die Öffnung (50) an der Unterseite des Bodenpaneels (15) in Überdeckung mit einer Öffnung (37) in der Anschlussbox (24) zum Verbinden des wenigstens einen Steckerendes (25-27) der wenigstens einen Leitung (12-14) vorgesehen ist und/oder dass die Anschlussbox (24) eine umlaufende Sollbruchlinie (51) zum Herausbrechen eines Öffnungsabschnitts (52) zum Bereitstellen einer Öffnung (37) in der Anschlussbox (24) zum Verbinden des wenigstens einen Steckerendes (25-27) der wenigstens einen Leitung (12-14) aufweist.

7. Nutzfahrzeug nach einem der Ansprüche 1 bis 6,
**dadurch gekennzeichnet, dass**
der Leitungskanal (16) einen Stirnwandanschluss (35) aufweist und dass das stirnseitige Ende des Stirnwandanschlusses (35) weiter von der Decklage (19) beabstandet ist als das rückseitige Ende des Stirnwandanschlusses (35) und/oder das stirnseitige Ende des Stirnwandanschlusses (35) näher an dem Ladeboden (10) angeordnet ist als das rückseitige Ende des Stirnwandanschlusses (35).

8. Nutzfahrzeug nach Anspruch 7,
**dadurch gekennzeichnet, dass**
der Stirnwandanschluss (35) in der Längserstreckung des Leitungskanals (16) gesehen, insbesondere wenigstens im Wesentlichen konstant, gekrümmt ist und dass, vorzugsweise, der Krümmungsradius des Leitungskanals (16) in einer sich wenigstens im Wesentlichen senkrecht zum Bodenpaneel (15) und in der Längsrichtung des Bodenpaneels (15) erstreckenden Ebene angeordnet ist.

9. Nutzfahrzeug nach Anspruch 7 oder 8,
**dadurch gekennzeichnet, dass**
der Stirnwandanschluss (35) wenigstens in der Längsrichtung des Leitungskanals (16) wenigstens zweiteilig ausgebildet ist und dass, vorzugsweise, der Stirnwandanschluss (35) wenigstens in etwa in einer Richtung quer zum Bodenpaneel (15) zweiteilig ausgebildet ist.

10. Nutzfahrzeug nach einem der Ansprüche 1 bis 9,
**dadurch gekennzeichnet, dass**
der Leitungskanal (16) mehrere, insbesondere sich wenigstens im Wesentlichen parallel zueinander erstreckende, Teilkanäle (38-40) aufweist und dass, vorzugsweise, wenigstens einige der Teilkanäle (38-40) quer zum Bodenpaneel (15) nebeneinander abgeordnet und/oder nur einige der Teilkanäle (38,39) mit dem wenigstens einen Deckel (42) in Längsrichtung verschlossen sind.

11. Nutzfahrzeug nach einem der Ansprüche 1 bis 10,
**dadurch gekennzeichnet, dass**
der Leitungskanal (16) wenigstens im Wesentlichen aus Kunststoff gebildet ist und/oder dass die wenigstens eine Leitung (12-14) als elektrische Leitung, Luftleitung, Treibstoffleitung und/oder Signalleitung ausgebildet ist.

12. Nutzfahrzeug nach einem der Ansprüche 1 bis 11,
**dadurch gekennzeichnet, dass**
der Leitungskanal (16) in der Quererstreckung des Bodenpaneels (15) wenigstens im Wesentlichen etwa mittig im Bodenpaneel (15) angeordnet ist.

13. Nutzfahrzeug nach einem der Ansprüche 1 bis 12,
**dadurch gekennzeichnet, dass** wenigstens ein Steckerende (21-23) der wenigstens einen Leitung (12-14) außerhalb des Leitungskanals (16), insbesondere außerhalb des Stirnwandanschlusses (35) und/oder außerhalb des stirnseitigen Endes des Leitungskanals (16) angeordnet ist und/oder dass wenigstens ein Steckerende (25-27) der wenigstens einen Leitung (12-14) innerhalb der Anschlussbox (24) und/oder außerhalb des rückseitigen Endes des Leitungskanals (16), insbesondere außerhalb der Abschlussbox (24) angeordnet ist.

14. Nutzfahrzeug nach einem der Ansprüche 1 bis 13,
**dadurch gekennzeichnet, dass**
das wenigstens eine Steckerende (25-27) der wenigstens einen Leitung (12-14) mit wenigstens einem korrespondierenden Steckerende (28-30) wenigstens einer weiteren korrespondierenden Leitung (31-33) verbunden ist und/oder dass die wenigstens eine Leitung, insbesondere die wenigstens eine weitere korrespondierende Leitung (31-33), außerhalb des Bodenpaneels (15), insbesondere an der Unterseite des Bodenpaneels (15) und/oder der Decklage (19) angeordnet ist.

## Claims

1. Commercial vehicle (1), in particular a heavy goods vehicle, trailer or semi-trailer, having a floor panel (15) comprising a loading floor (10), a top layer (19) and a core layer (34) provided between the loading floor (10) and the top layer (19) and formed at least substantially of a foamed plastic, and having at least one line (12-24) extending at least substantially from the face side of the floor panel (15) in the direction of the rear side of the commercial vehicle (1), wherein the at least one line (12-14) is received at least in sections in a line channel (16) arranged in the core layer (34) and wherein the line channel (16) extends at least substantially from the face side of the floor panel (15) in the direction of the rear side of the floor panel (15), **characterised in that** the line channel (16) has at least one cover (42) at least partially in the longitudinal direction of the line channel (16) to open the line channel (16).

2. Commercial vehicle according to claim 1, **characterised in that** the line channel (16) has, on the face side of the floor panel (15), in particular in the region of the core layer (34), an opening to feed through the at least one line (12-14) and/or **in that** the line channel (16) has, on the underside of the floor panel (15), in particular in the top layer (19), an opening (37) to feed through the at least one line (12-14).

3. Commercial vehicle according to claim 1 or 2, **characterised in that** the commercial vehicle (1) is a semi-trailer having a kingpin (20) and/or a wear plate (18), **in that** the line channel (16) extends at least substantially from the face side of the floor panel (15) beyond the region of the kingpin (20) and/or the wear plate (18) in the direction of the rear side of the commercial vehicle (1) and **in that**, preferably, the opening (37, 50) is arranged on the underside of the floor panel (15), when viewed from the face side of the floor panel (15), behind the region of the kingpin (20) and/or the wear plate (18).

4. Commercial vehicle according to any one of claims 1 to 3, **characterised in that** the at least one cover (42) is held on the line channel (16) via a hinge, in particular a film hinge (43), and/or in a form-fitting manner, in particular via a latching connection.

5. Commercial vehicle according to any one of claims 1 to 4, **characterised in that** the line channel (16) is provided, on its longitudinal end assigned to the rear side of the floor panel (15), with a connection box (24) for receiving at least one plug end (25-27) of at least one line (12-14) and **in that**, preferably, the connection box (24) has a greater free cross-section in the longitudinal direction of the line channel (16) than the section of the line channel (16) connecting to the connection box (24).

6. Commercial vehicle according to claim 5, **characterised in that** the opening (50) is provided on the underside of the floor panel (15) overlapping with an opening (37) in the connection box (24) to connect the at least one plug end (25-27) of the at least one line (12-14) and/or **in that** the connection box (24) has a circumferential predetermined breaking line (51) for breaking out an opening section (52) for providing an opening (37) in the connection box (24) to connect the at least one plug end (25-27) of the at least one line (12-14).

7. Commercial vehicle according to any one of claims 1 to 6, **characterised in that** the line channel (16) has an end wall connection (35) and **in that** the frontal end of the end wall connection (35) is spaced further apart from the top layer (19) than the rear end of the end wall connection (35) and/or the frontal end of the end wall connection (35) is arranged closer to the loading floor (10) than the rear end of the end wall connection (35).

8. Commercial vehicle according to claim 7, **characterised in that** the end wall connection (35), when viewed in the longitudinal extension of the line channel (16), is, in particular at least substantially constantly, curved and **in that**, preferably, the radius of curvature of the line channel (16) is arranged in a plane extending at least substantially perpendicular to the floor panel (15) and in the longitudinal direction of the floor panel (15).

9. Commercial vehicle according to claim 7 or 8, **characterised in that** the end wall connection (35) is formed at least in two parts at least in the longitudinal direction of the line channel (16) and **in that**, preferably, the end wall connection (35) is formed in two parts at least roughly in a direction transverse to the floor panel (15).

10. Commercial vehicle according to any one of claims 1 to 9, **characterised in that** the line channel (16) has a plurality of partial channels (38-40) extending in particular at least substantially parallel to one another and **in that**, preferably, at least some of the partial channels (38-40) are arranged next to one another transverse to the floor panel (15) and/or only some of the partial channels (38, 39) are sealed with the at least one cover (42) in the longitudinal direction.

11. Commercial vehicle according to any one of claims 1 to 10, **characterised in that** the line channel (16) is formed at least substantially of plastic and/or **in that** the at least one line (12-14) is formed as an electric line, air line, fuel line and/or signal line.

12. Commercial vehicle according to any one of claims 1 to 11, **characterised in that** the line channel (16) is arranged in the transverse extension of the floor panel (15) at least substantially roughly centrally in the floor panel (15).

13. Commercial vehicle according to any one of claims 1 to 12, **characterised in that** at least one plug end (21-23) of the at least one line (12-14) is arranged outside of the line channel (16), in particular outside of the end wall connection (35) and/or outside of the frontal end of the line channel (16) and/or **in that** at least one plug end (25-27) of the at least one line (12-14) is arranged inside the connection box (24) and/or outside of the rear end of the line channel (16), in particular outside of the connection box (24).

14. Commercial vehicle according to any one of claims 1 to 13, **characterised in that** the at least one plug end (25-27) of the at least one line (12-14) is connected to at least one corresponding plug end (28-30) of at least one further corresponding line (31-33) and/or **in that** the at least one line, in particular the at least one further corresponding line (31-33), is arranged outside of the floor panel (15), in particular on the underside of the floor panel (15) and/or the top layer (19).

## Revendications

1. Véhicule utilitaire (1), en particulier camion, remorque ou semi-remorque, avec un panneau de plancher (15) comportant un plancher de chargement (10), une couche de revêtement (19) et une couche centrale (34), prévue entre le plancher de chargement (10) et la couche de revêtement (19), et formée au moins essentiellement d'une matière plastique expansée, et avec au moins une conduite (12-14) s'étendant au moins essentiellement depuis la face frontale du panneau de plancher (15) en direction de la face arrière du véhicule utilitaire (1), ladite au moins une conduite (12-14) étant logée, au moins partiellement, dans un canal de conduite (16) agencé dans la couche centrale (34) et le canal de conduite (16) s'étendant au moins essentiellement depuis la face frontale du panneau de plancher (15) en direction de la face arrière du panneau de plancher (15),
**caractérisé en ce que**
le canal de conduite (16) présente au moins un couvercle (42) dans la direction longitudinale du canal de conduite (16) pour ouvrir le canal de conduite (16), au moins partiellement.

2. Véhicule utilitaire selon la revendication 1,
**caractérisé en ce que**
le canal de conduite (16) présente sur la face frontale du panneau de plancher (15), notamment dans la zone de la couche centrale (34), une ouverture pour le passage de ladite au moins une conduite (12-14) et/ou **en ce que** le canal de conduite (16) présente sur la face inférieure du panneau de plancher (15), notamment dans la couche de revêtement (19), une ouverture (37) pour le passage de ladite au moins une conduite (12-14).

3. Véhicule utilitaire selon la revendication 1 ou 2,
**caractérisé en ce que**
le véhicule utilitaire (1) est une semi-remorque avec un kingpin (20) et/ou une plaque abrasive (18), **en ce que** le canal de conduite (16) s'étend, au moins essentiellement, depuis la face frontale du panneau de plancher (15) au-delà de la zone du kingpin (20) et/ou de la plaque abrasive (18) en direction du côté arrière du véhicule utilitaire (1) et **en ce que**, de préférence, l'ouverture (37, 50) sur le côté inférieur du panneau de plancher (15) est agencée derrière la zone du kingpin (20) et/ou de la plaque abrasive (18), vu depuis la face frontale du panneau de plancher (15).

4. Véhicule utilitaire selon l'une des revendications précédentes 1 à 3,
**caractérisé en ce que** ledit au moins un couvercle (42) est maintenu sur
la conduite (16) par une charnière, en particulier une charnière-film (43), et/ou par liaison de forme, notamment par une liaison à encliquetage.

5. Véhicule utilitaire selon l'une des revendications 1 à 4,
**caractérisé en ce que**
la conduite (16) comporte, à son extrémité longitudinale associée à la face arrière du panneau de plancher (15), un boîtier de connexion (24) destiné à recevoir au moins une fiche mâle (25-27) d'au moins une conduite (12-14), et **en ce que**, de préférence, le boîtier de connexion (24) a une section transversale libre plus grande dans la direction longitudinale du canal de conduite (16) que la section du canal de conduite (16) reliée à la boîte de connexion (24).

6. Véhicule utilitaire selon la revendication 5,
**caractérisé en ce que**
l'ouverture (50) sur la face inférieure du panneau de plancher (15) est prévue en recouvrement avec une ouverture (37) dans le boîtier de connexion (24) pour raccorder ladite au moins une fiche mâle (25-27) de ladite au moins une conduite (12-14) et/ou **en ce que** le boîtier de connexion (24) présente une ligne de rupture (51) périphérique pour rompre une section d'ouverture (52) afin de fournir une ouverture (37) dans le boîtier de connexion (24) pour raccorder ladite au moins une fiche mâle (25-27) de ladite au moins un conduite (12-14).

7. Véhicule utilitaire selon l'une des revendications 1 à 6,
**caractérisé en ce que**
le canal de conduite (16) présente un raccord de paroi frontale (35) et **en ce que** l'extrémité frontale du raccord de paroi frontale (35) est plus éloignée de la couche de revêtement (19) que l'extrémité arrière du raccord de paroi frontale (35) et/ou l'extrémité frontale du raccord de paroi frontale (35) est agencée plus près du plancher de chargement (10) que l'extrémité arrière du raccord de paroi frontale (35).

8. Véhicule utilitaire selon la revendication 7,
**caractérisé en ce que**
le raccord de paroi frontale (35), vu dans l'extension longitudinale du canal de conduit (16), est courbé, notamment au moins sensiblement constant, et **en ce que**, de préférence, le rayon de courbure du canal de conduite (16) est agencé dans un plan s'étendant au moins sensiblement perpendiculairement au panneau de plancher (15) et dans la direction longitudinale du panneau de plancher (15).

9. Véhicule utilitaire selon la revendication 7 ou 8,
**caractérisé en ce que**
le raccord de paroi frontale (35) est formé au moins en deux parties, au moins dans la direction longitudinale du canal de conduite (16) et **en ce que**, de préférence, le raccord de paroi frontale (35) est formé en deux parties, au moins approximativement, dans une direction transversale au panneau de plancher (15).

10. Véhicule utilitaire selon l'une des revendications 1 à 9,
**caractérisé en ce que**
le canal de conduite (16) présente plusieurs canaux partiels (38-40), notamment s'étendant au moins sensiblement parallèlement les uns aux autres, et **en ce que**, de préférence, au moins quelques-uns des canaux partiels (38-40) sont agencés les uns à côté des autres transversalement par rapport au panneau de plancher (15) et/ou seuls quelques-uns des canaux partiels (38, 39) sont fermés dans la direction longitudinale par ledit au moins un couvercle (42).

11. Véhicule utilitaire selon l'une des revendications 1 à 10,
**caractérisé en ce que**
le canal de conduite (16) est formé au moins essentiellement de matière plastique et/ou **en ce que** ladite au moins une conduite (12-14) est conçue comme une ligne électrique, une conduite d'air, une conduite de carburant et/ou un câble de signaux.

12. Véhicule utilitaire selon l'une des revendications là 11,
**caractérisé en ce que**
le canal de conduite (16) est agencé au moins sensiblement à peu près au milieu du panneau de plancher (15) dans l'extension transversale du panneau de plancher (15).

13. Véhicule utilitaire selon l'une des revendications 1 à 12,
**caractérisé en ce que**
au moins une fiche mâle (21-23) de ladite au moins une conduite (12-14) est agencée à l'extérieur du canal de conduite (16), notamment à l'extérieur du raccord de paroi frontale (35) et/ou à l'extérieur de l'extrémité frontale du canal de conduite (16) et/ou **en ce qu'**au moins une fiche mâle (25-27) de ladite au moins une conduite (12-14) est agencée à l'intérieur du boîtier de connexion (24) et/ou à l'extérieur de l'extrémité arrière du canal de conduite (16), notamment à l'extérieur du boîtier de connexion (24).

14. Véhicule utilitaire selon l'une des revendications 1 à 13,
**caractérisé en ce que**
ladite au moins une fiche mâle (25-27) de ladite au moins une conduite (12-14) est reliée à au moins une fiche mâle correspondante (28-30) d'au moins une autre conduite correspondante (31-33) et/ou
ladite au moins une conduite, notamment ladite au moins une autre conduite correspondante (31-33), est agencée à l'extérieur du panneau de plancher (15), en particulier sur la face inférieure du panneau de plancher (15) et/ou de la couche de revêtement (19).
